# EUROPÄISCHE PATENTSCHRIFT

(11) **EP 2 316 258 B1**
(45) Veröffentlichungstag und Bekanntmachung des Hinweises auf die Patenterteilung: **23.11.2016**
(21) Anmeldenummer: 10401173.9
(22) Anmeldetag: 08.10.2010
(51) Int. Cl.: A01C 17/00, E01C 19/20

(54) **Schleuderstreuer**
Centrifugal spreader
Epandeur d'engrais centrifuge

(30) Priorität: 13.10.2009 DE 102009044238
(43) Veröffentlichungstag der Anmeldung: 04.05.2011
(73) Patentinhaber: Amazonen-Werke H. Dreyer GmbH & Co. KG, 49205 Hasbergen (DE)
(72) Erfinder: Johannaber, Stefan Jan, 49536 Lienen (DE)

(56) Entgegenhaltungen:
- EP-A1- 0 542 112
- EP-A1- 1 293 114
- DE-A1-102005 030 781
- GB-A- 796 702

## Beschreibung

Die Erfindung betrifft einen Schleuderstreuer gemäß des Oberbegriffes des Patentanspruches 1.

Ein derartiger Schleuderstreuer ist beispielsweise durch die EP 17 38 632 B2 bekannt. Die Dosieröffnung der Dosierplatte ist mittels eines unter der Dosierplatte angeordneten Dosierschiebers zu verschließen und in ihrer Öffnungsweite einstellbar. Zur Führung des Dosierschiebers ist ein flächenartiges Gleitlager vorgesehen. Dieses wird von der Oberfläche eines an der Dosierplatte befestigten Auslaufschachtes gebildet. Das Problem besteht nun darin, dass zwischen der Dosierplatte, dem Dosierschieber und/oder der oberen Fläche des Auslaufschachtes, die als Gleitlagerfläche dient, Dünger gelangen kann. Dies kann zum Verklemmen der zueinander verstellbaren Elemente führen. Ein ähnlicher Schleuderstreuer ist bekannt von EP 12 93 114 A1.

Der Erfindung liegt die Aufgabe zugrunde, eine verbesserte Gleitlagerausgestaltung einer Schieberlagerung an der Dosierplatte unter Minderung der Verklemmungsgefahr durch zwischen die zueinander verstellbaren Teile geratenen Düngerpartikel zu schaffen.

Diese Aufgabe wird erfindungsgemäß dadurch gelöst, dass das auf der Unterseite der Bodenplatte ein sich an die Dosieröffnung unmittelbar anschließender konturengleich mit der Dosieröffnung umlaufender wulstartiger Dichtring angeordnet ist, dass der Schieber beabstandet zu der Bodenplatte angeordnet ist, dass der Schieber zumindest annähernd abdichtend mit dem wulstartigen Dichtring zusammenwirkt. Infolge dieser Maßnahmen wir durch die beabstandete Anordnung des Dosierschiebers zu der Unterseite der Bodenplatte erreicht, dass Dünger der zwischen der Unterseite der Bodenplatte, in welcher sich die Dosieröffnung befindet, und der Oberseite des Schiebers gelangt, zu keinem Verklemmen der zueinander bewegbaren Teile führen kann. Durch den schmalen umlaufenden wulstartigen Dichtring im Bereich der Dosieröffnung zwischen Bodenplatte und Schieber wird eine sehr geringe Berührungsfläche zwischen Bodenplatte und Schieber erreicht. Hierdurch ergibt sich eine sehr große Leichtgängigkeit des Schiebers gegenüber der Bodenplatte. Mittels des wulstartigen Dichtringes wird nur dort eine Berührung zwischen Bodenplatte und Schieber erreicht, die lediglich zur Abdichtung der Bodenplatte gegenüber dem Schieber im Bereich der Dosieröffnung erforderlich ist.

Versuche haben gezeigt, dass nur ein kleiner Abstand zwischen Unterseite der Bodenplatte und Oberseite des Schiebers zum Erreichen der vor geschilderten Vorteile erforderlich ist. Um dieses zu gewährleisten, ist erfindungsgemäß vorgesehen, dass der Abstand zwischen der Bodenplatte und dem Schieber zwischen 4 mm und 10 mm vorzugsweise 6 mm beträgt, dass dieser Abstand zumindest annähernd der Höhe des an die Bodenplatte angeordneten wulstartigen Dichtringes entspricht.

Eine einfache Anordnung und Ausgestaltung des wulstartigen Dichtringes lässt sich dadurch erreichen, dass der wulstartige Dichtring als Einsatzelement in die Bodenplatte ausgebildet ist, dass das Einsatzelement die Kontur der Dosieröffnung aufweist.

Eine einfache Ausgestaltung des wulstartigen Dichtringes lässt sich dadurch erreichen, dass die Bodenplatte eine Aussparung aufweist, dass in die Aussparung das Einsatzelement mit dem wulstartigen Dichtring, der eine der Kontur der Dosieröffnung aufweist, eingesetzt ist.

Eine besonders gute Abdichtung zwischen dem Außenbereich und der Dosieröffnung sowie eine hohe Leichtgängigkeit des Schiebers gegenüber dem wulstartigen Dichtring lässt sich dadurch erreichen, dass der wulstartige Dichtring ein mit dem Schieber zumindest annähernd abdichtend zusammenwirkendes Dichtlippenelement aufweist.

Eine vorteilhafte Ausgestaltung der Gleitlagerung, mittels der der Dosierschieber an der Bodenplatte geführt ist, lässt sich dadurch erreichen, dass die Gleitlagerung an der Bodenplatte befestigte und den Dosierschieber von unten tragende und ringsegmentförmig angeordnete Lagerflächenelemente aufweist, wobei die Lagerflächenelemente kammartig und/oder fingerartig ausgestaltet sind. Infolge dieser Maßnahmen sind nur sehr kleine Flächen im Bereich der Gleitlagerung vorhanden, zwischen welchen Material gelangen kann. Aufgrund der geringen Ausdehnung der kamm- oder fingerartigen Lagerflächenelemente ist die Gefahr der Verklemmung durch zwischen den bewegbaren Teilen gelagerten Materialpartikel fast völlig ausgeschlossen.

Eine vorteilhafte Ausgestaltung der den Dosierschieber tragenden Lageflächenelemente ergibt sich dadurch, dass die den Dosierschieber tragenden Lagerflächenelemente als strahlenförmig auf die Drehachse des Dosierschiebers ausgerichtete stabförmige und/oder stiftartige Lagermittel sind, dass zwischen den Lagermitteln nach unten und zur Drehlagerung des Schiebers offene Aussparungen sich befinden. Hierdurch wird eine materialarme und vorteilhafte Anordnung und Ausgestaltung der Lagerflächenelemente erreicht.

Auch können die Lagermittel zusätzlich nach außen hin offene Aussparungen aufweisen.

Eine weitere verbesserte Ausgestaltung der Gleitlagerung lässt sich dadurch erreichen, dass im Bereich der Gleitlagerung zwischen der Bodenplatte und dem Dosierschieber an der Bodenplatte befestigte Abstandselemente angeordnet sind, wobei die Abstandselemente kammartig und/oder fingerartig ausgestaltet sind.

Eine einfache Herstellung und Ausbildung der

Gleitlagerelemente lässt sich dadurch erreichen, dass die Lagerflächenelemente und die Abstandselemente zu einem Bauteil zusammengefasst sind.

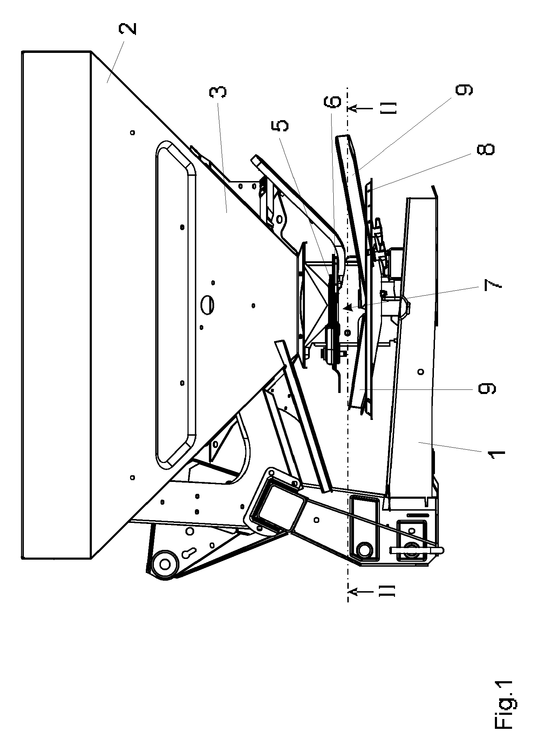

Weitere Einzelheiten der Erfindung sind der Beispielsbeschreibung und den Zeichnungen zu entnehmen. Hierbei zeigen
- Fig. 1: den Schleuderdüngerstreuer in Seitenansicht,
- Fig. 2: die Dosierplatte mit Dosierschieber in der Ansicht II - II,
- Fig. 3: die Anordnung der Dosierplatte und des Dosierschiebers in der Ansicht III - III,
- Fig. 4: die Ausbildung der Dosieröffnung in der Dosierplatte mit dem Dosierschieber nach Fig. 3 im vergrößerten Maßstab
- Fig. 5: das kammartige und/oder fingerartige Gleitlagerelement in perspektivischer Darstellung,
- Fig. 6: das Gleitlagerelement in der Ansicht VI - VI,
- Fig. 7: ein anders ausgestalteter wulstartiger Dichtring in der Darstellung und
- Fig. 8: ein weiterer wulstartiger Dichtring mit Dichtlippenelement in der Darstellung nah Fig. 4.

Der als Schleuderstreuer ausgebildete Zentrifugaldüngerstreuer weist den Rahmen 1 mit dem Vorratsbehälter 2 auf. Der Vorratsbehälter 2 weist das sich nach unten trichterförmig verjüngende Unterteil 3 auf, welches mit einer zumindest eine Dosieröffnung 4 aufweisenden Bodenplatte 5 abgeschlossen ist. Die Bodenplatte 5 weist eine Aussparung, die die Dosieröffnung 4 bildet, mit einer bestimmten Kontur auf. Die Dosieröffnung 4 ist mittels eines unterhalb der Bodenplatte 5 verstellbar angeordneten Dosierschiebers 6 verschließbar und in ihrer Öffnungsweite einstellbar. Unterhalb der von der Dosieröffnung 4 und dem Dosierschieber 6 gebildeten Dosiereinrichtung ist die rotierend angetriebene Schleuderscheibe 8 mit den darauf angeordneten Wurfschaufeln 9 angeordnet. Über die Dosieröffnung 4 wird im Zusammenwirken mit dem Schieber 6 das sich im Vorratsbehälter befindliche Material in einstellbaren Mengen der Schleuderscheibe 8 zugeführt. Mittels der Wurfschaufeln 9 wird das Material in Breitverteilung auf der Bodenoberfläche verteilt.

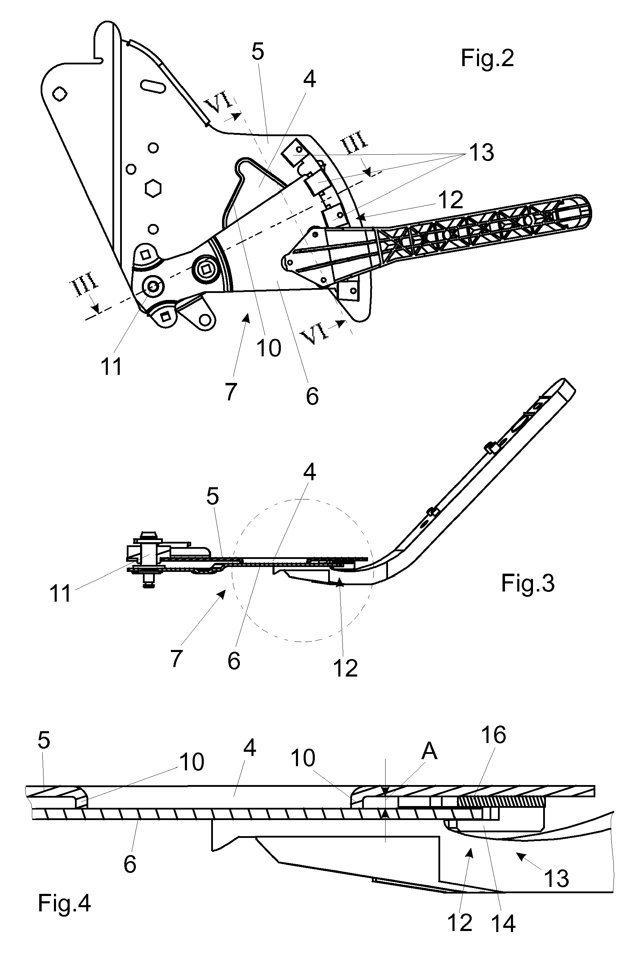

An der Unterseite der Bodenplatte 5 ist ein sich an die Dosieröffnung 4 unmittelbar anschließender konturengleich mit der Dosieröffnung umlaufender wulstartiger Dichtring 10 angeordnet, wie die Fig. 2 bis 4 zeigen. Der wulstartige Dichtring 10 weist die gleiche Kontur wie die Dosieröffnung 4 auf. In den Ausführungsbeispielen gemäß den Fig. 2 bis 4 ist der wulstartige Dichtring 10 durch Umprägung der Kante der Bodenplatte 5 im Bereich der Dosieröffnung 4 ausgestaltet. Unterhalb der Bodenplatte 5 ist der Dosierschieber 6 mit seiner Oberseite zumindest annähernd an die untere Fläche des wulstartigen Dichtringes 10 anliegend angeordnet. Der Dosierschieber 6 ist mittels eines Drehgelenkes 11 an der Bodenplatte 5 auf seiner einen Seite drehbar gelagert. Auf der dem Drehlager 11 abgewandten Seite ist der Dosierschieber 6 mittels einer Gleitlagerung 12 an der Bodenplatte 5 zusätzlich verschieblich gelagert, damit der Dosierschieber 6 eine definierte Position zu der Unterkante des wulstartigen Dichtringes 10 aufweist. Der Dosierschieber 6 ist mit nicht dargestellten Einstellelementen, die auch motorisch angetrieben ausgebildet sein können, in Positionen zu bringen, so dass die Dosieröffnung 4 zu verschließen bzw. in einer bestimmten Öffnungsweite einzustellen ist. Der Schieber 6 wirkt somit zumindest annähernd abdichtend mit dem wustartigen Dichtring 10 zusammen.

Der Abstand A zwischen der Bodenplatte 5 und dem Schieber 6 beträgt zwischen 4 mm und 10 mm, vorzugsweise 6 mm. Dieser Abstand A entspricht zumindest annähernd der Höhe des an die Bodenplatte 5 angeordneten wulstartigen Dichtringes 10, und zwar des Maßes, in dem der wulstartige Dichtring 10 die Unterseite der Bodenplatte 5 nach unten überragt.

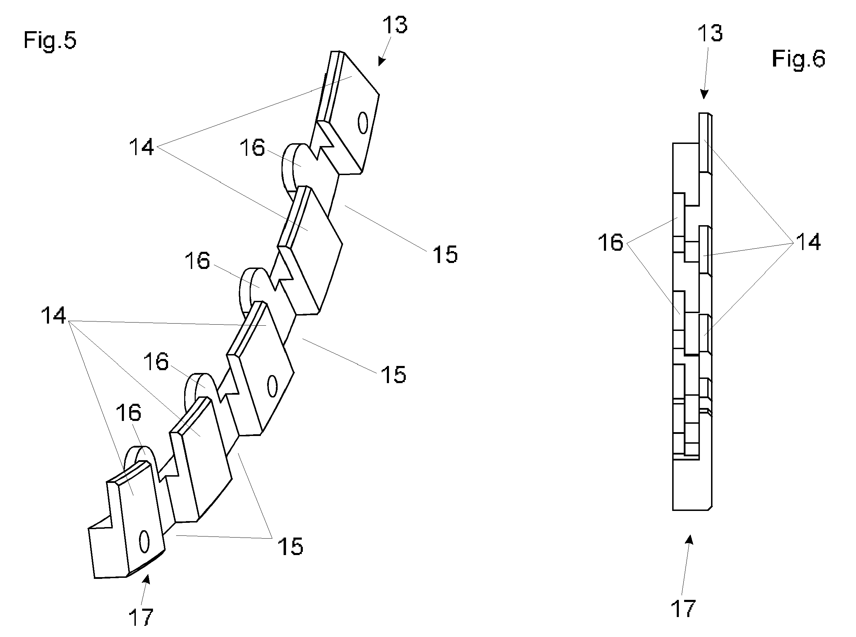

Die Gleitlagerung 12 weist an der Bodenplatte 5 befestigte und den Dosierschieber 6 von unten tragende und ringsegmentförmig angeordnete Lagerflächenelemente 13 auf. Hierbei sind die Lagerflächenelemente kamm- oder fingerartig ausgestaltet, wie die Fig. 2 bis 6 zeigen. Diese den Dosierschieber 6 tragende Lagerflächenelemente 13 sind als strahlenförmig auf die Drehachse des Lagers des Dosierschiebers 6 ausgerichtete stabförmige und/oder stiftförmige Lagermittel 14 ausgestaltet, wie insbesondere Fig. 2 zeigt. Zwischen den Lagermitteln 14 befinden sich nach unten und zur Drehlagerung 11 des Schiebers 6 offene Aussparungen 15. Um den Schieber 6 in dem vorgesehenen Abstand A zu der Bodenplatte 5 zu halten sind im Bereich der Gleitlagerung 12 zwischen der Bodenplatte 5 und dem Dosierschieber 6 an der Bodenplatte 5 befestigte Abstandselemente 16 angeordnet, wie die Fig. 3 und 4 zeigen. Diese Abstandselemente 16 sind kamm- oder fingerartig ausgestaltet, wie insbesondere der Fig. 5 zu entnehmen ist. Die Lagerflächenelemente 13 und Abstandselemente 16 sind zu einem Bauteil 17 zusammengefasst, wie insbesondere die Fig. 5 und 6 zeigen.

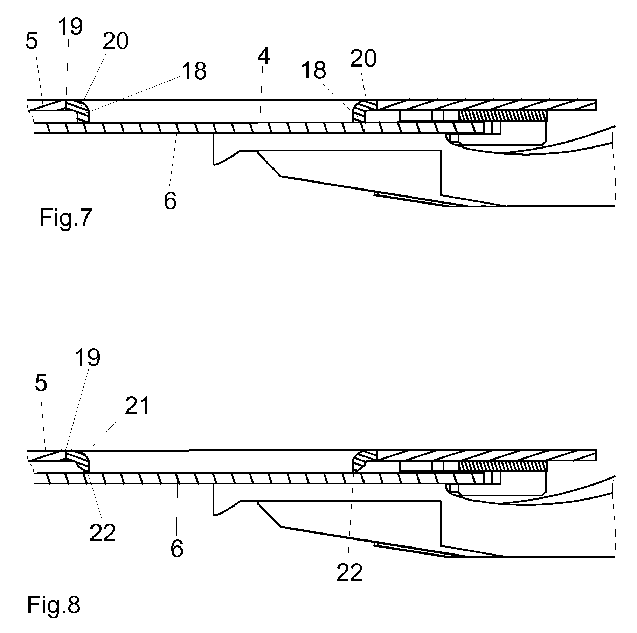

Gemäß den Fig. 7 und 8 ist das wulstartige Dichtelement 18 nicht als durch Prägung der Bodenplatte 5 ausgeformtes kragenartiges Element ausgestaltet. Vielmehr ist hier eine größere Aussparung 19 in der Bodenplatte 5 vorgesehen. In diese Aussparung 19 ist dann ein Einsatzelement 20 mit dem wulstartigen Dichtring 18, der eine Kontur der der Dosieröffnung entsprechenden Durchflussöffnung 4 aufweist, angeordnet.

Gemäß dem Ausführungsbeispiel nach Fig. 8 ist an dem wulstartigen Dichtring 21, welcher ebenfalls als Einsatzelement ausgebildet ist, ein mit dem Schieber 6 zumindest annähernd abdichtend zusammenwirkendes Dichtlippenelement 22 auf der Unterseite des wulstartigen Dichtringes 21 angeordnet, wie die Fig. 8 zeigt.

## Patentansprüche

1. Schleuderstreuer mit einem Vorratsbehälter, der zumindest ein sich zu einem Trichter verjüngendes Unterteil aufweist, welches mit einer zumindest eine Dosieröffnung aufweisenden Bodenplatte abgeschlossen ist, wobei die Dosieröffnung mit einem unterhalb der Bodenplatte verstellbar angeordnetem Dosierschieber verschließbar und in ihrer Öffnungsweite einstellbar ist, **dadurch gekennzeichnet, dass** auf der Unterseite der Bodenplatte ( 5 ) ein sich an die Dosieröffnung ( 4 ) unmittelbar anschließender konturengleich mit der Dosieröffnung ( 4 ) umlaufender wulstartiger Dichtring ( 10 ) angeordnet ist, wobei der Schieber ( 6 ) beabstandet zu der Bodenplatte ( 5 ) angeordnet ist, und der Schieber ( 6 ) zumindest annähernd abdichtend mit dem wulstartigen Dichtring ( 10 ) zusammenwirkt.

2. Schleuderstreuer nach Anspruch 1, **dadurch gekennzeichnet, dass** der Abstand ( A ) zwischen der Bodenplatte ( 5 ) und dem Schieber ( 6 ) zwischen 4 mm und 10 mm vorzugsweise 6 mm beträgt, dass dieser Abstand ( A ) zumindest annähernd der Höhe des an die Bodenplatte ( 5 ) angeordneten wulstartigen Dichtringes ( 10 ) entspricht.

3. Schleuderstreuer nach zumindest einem der vorstehenden Ansprüche, **dadurch gekennzeichnet, dass** der wulstartige Dichtring ( 18, 21 ) als Einsatzelement in die Bodenplatte ( 5 ) ausgebildet ist, dass das Einsatzelement ( 18, 21 ) die Kontur der Dosieröffnung ( 4 ) aufweist.

4. Schleuderstreuer nach zumindest einem der vorstehenden Ansprüche, **dadurch gekennzeichnet, dass** die Bodenplatte ( 5 ) eine Aussparung ( 19 ) aufweist, dass in die Aussparung ( 19 ) das Einsatzelement ( 18, 21 ) mit dem wulstartigen Dichtring, der eine der Kontur der Dosieröffnung ( 4 ) aufweist, eingesetzt ist.

5. Schleuderstreuer nach zumindest einem der vorstehenden Ansprüche, **dadurch gekennzeichnet, dass** der wulstartige Dichtring ( 21) ein mit dem Schieber ( 6 ) zumindest annähernd abdichtend zusammenwirkendes Dichtlippenelement ( 22 ) aufweist.

6. Schleuderstreuer nach Anspruch 1, wobei der Dosierschieber ( 6 ) zumindest teilweise mittels einer Gleitlagerung ( 12 ) an der Bodenplatte ( 5 ) geführt ist, **dadurch gekennzeichnet, dass** die Gleitlagerung ( 12 ) an der Bodenplatte ( 5 ) befestigte und den Dosierschieber ( 6 ) von unten tragende und ringsegmentförmig angeordnete Lagerflächenelemente ( 13, 14 ) aufweist, wobei die Lagerflächenelemente ( 13, 14 ) kammartig und/oder fingerartig ausgestaltet sind.

7. Schleuderstreuer nach Anspruch 6, wobei der Dosierschieber ( 6 ) mittels eines Drehlagers ( 11 ) an der Bodenplatte befestigt ist, **dadurch gekennzeichnet, dass** die den Dosierschieber ( 6 ) tragenden Lagerflächenelemente ( 13, 14 ) als strahlenförmig auf die Drehachse ( 11 ) des Dosierschiebers ( 6 ) ausgerichtete stabförmige und/oder stiftartige Lagermittel ( 14 ) sind, dass zwischen den Lagermitteln ( 14 ) nach unten und zur Drehlagerung ( 11 ) des Schiebers ( 6 ) offene Aussparungen ( 15 ) sich befinden.

8. Schleuderstreuer nach Anspruch 6, **dadurch gekennzeichnet, dass** im Bereich der Gleitlagerung ( 12 ) zwischen der Bodenplatte ( 5 ) und dem Dosierschieber ( 6 ) an der Bodenplatte ( 5 ) befestigte Abstandselemente ( 16 ) angeordnet sind, wobei die Abstandselemente ( 16 ) kammartig und/oder fingerartig ausgestaltet sind.

9. Schleuderstreuer nach zumindest einem der Ansprüche 6 bis 8, **dadurch gekennzeichnet, dass** die Lagerflächenelemente ( 13 ) und die Abstandselemente ( 16 ) zu einem Bauteil ( 17 ) zusammengefasst sind.

## Claims

1. Centrifugal spreader with a storage container which has at least one lower part which tapers to form a hopper and is closed off by a base plate having at least one metering opening, wherein the metering opening can be closed with a metering slide arranged adjustably below the base plate and can be set in its opening width, **characterized in that** a bead-like sealing ring (10) which directly adjoins the metering opening (4) and encircles the metering opening (4) with the same contour is arranged on the lower side of the base plate (5), wherein the slide (6) is arranged at a distance from the base plate (5), and the slide (6) interacts in at least an approximately sealing manner with the bead-like sealing ring (10).

2. Centrifugal spreader according to Claim 1, **characterized in that** the distance (A) between the base plate (5) and the slide (6) is between 4 mm and 10 mm, preferably 6 mm, **in that** said distance (A) at least approximately corresponds to the height of the bead-like sealing ring (10) arranged on the base plate (5).

3. Centrifugal spreader according to at least one of the preceding claims, **characterized in that** the bead-like sealing ring (18, 21) is designed as an insertable element into the base plate (5), **in that** the insertable element (18, 21) has the contour of the metering opening ( 4 ).

4. Centrifugal spreader according to at least one of the preceding claims, **characterized in that** the base plate (5) has a recess (19), **in that** the insertable element (18, 21) with the bead-like sealing ring which has a of the contour of the metering opening (4) is inserted into the recess (19).

5. Centrifugal spreader according to at least one of the preceding claims, **characterized in that** the bead-like sealing ring (21) has a sealing lip element (22) interacting in at least an approximately sealing manner with the slide (6).

6. Centrifugal spreader according to Claim 1, wherein the metering slide (6) is at least partially guided on the base plate (5) by means of a plain bearing (12), **characterized in that** the plain bearing (12) has bearing surface elements (13, 14) which are fastened to the base plate (5) and support the metering slide (6) from below and are arranged in the shape of a segment of a ring, wherein the bearing surface elements (13, 14) are configured in the manner of a comb and/or in the manner of fingers.

7. Centrifugal spreader according to Claim 6, wherein the metering slide (6) is fastened to the base plate by means of a rotary bearing (11), **characterized in that** the bearing surface elements (13, 14) supporting the metering slide (6) are bar-shaped and/or pin-like bearing means (14) which are aligned radially to the axis of rotation (11) of the metering slide (6), **in that** recesses (15) which are open downwards and to the rotary bearing (11) of the slide (6) are located between the bearing means (14).

8. Centrifugal spreader according to Claim 6, **characterized in that** spacer elements (16) which are fastened to the base plate (5) are arranged between the base plate (5) and the metering slide (6) in the region of the plain bearing (12), wherein the spacer elements (16) are configured in the manner of a comb and/or in the manner of fingers.

9. Centrifugal spreader according to at least one of Claims 6 to 8, **characterized in that** the bearing surface elements (13) and the spacer elements (16) are combined to form a component (17).

## Revendications

1. Epandeur centrifuge avec un réservoir de stockage, qui présente au moins une partie inférieure se rétrécissant en une trémie, qui est fermée avec une plaque de fond présentant au moins une ouverture de dosage, dans lequel l'ouverture de dosage peut être fermée avec un tiroir de dosage disposé de façon déplaçable en dessous de la plaque de fond et est réglable au niveau de sa largeur d'ouverture, **caractérisé en ce qu'**un anneau d'étanchéité (10) de type bourrelet périphérique de contour identique à l'ouverture de dosage (4) et se raccordant directement à l'ouverture de dosage (4) est disposé sur le côté inférieur de la plaque de fond (5), dans lequel le tiroir (6) est disposé à distance de la plaque de fond (5) et le tiroir (6) coopère au moins approximativement de façon étanche avec l'anneau d'étanchéité de type bourrelet (10).

2. Epandeur centrifuge selon la revendication 1, **caractérisé en ce que** la distance (A) entre la plaque de fond (5) et le tiroir (6) vaut entre 4 mm et 10 mm, de préférence 6 mm, **en ce que** cette distance (A) correspond au moins approximativement à la hauteur de l'anneau d'étanchéité de type bourrelet (10) disposé sur la plaque de fond (5).

3. Epandeur centrifuge selon au moins une des revendications précédentes, **caractérisé en ce que** l'anneau d'étanchéité de type bourrelet (18, 21) est réalisé sous forme d'élément rapporté dans la plaque de fond (5), et **en ce que** l'élément rapporté (18, 21) présente le contour de l'ouverture de dosage (4).

4. Epandeur centrifuge selon au moins une des revendications précédentes, **caractérisé en ce que** la plaque de fond (5) présente une découpe (19), et **en ce que** l'élément rapporté (18, 21) avec l'anneau d'étanchéité, qui présente un du contour de l'ouverture de dosage (4), est inséré dans la découpe (19).

5. Epandeur centrifuge selon au moins une des revendications précédentes, **caractérisé en ce que** l'anneau d'étanchéité de type bourrelet (21) présente un élément de lèvre d'étanchéité (22) coopérant au moins approximativement de façon étanche avec le tiroir (6).

6. Epandeur centrifuge selon la revendication 1, dans lequel le tiroir de dosage (6) est guidé au moins partiellement au moyen d'un appui lisse (12) sur la plaque de fond (5), **caractérisé en ce que** l'appui lisse (12) présente des éléments de face d'appui (13, 14) fixés à la plaque de fond (5) et portant par-dessous le tiroir de dosage (6) et disposés en forme de segment annulaire, dans lequel les éléments de face d'appui (13, 14) sont configurés en forme de peigne et/ou en forme de doigts.

7. Epandeur centrifuge selon la revendication 6, dans lequel le tiroir de dosage (6) est fixé à la plaque de fond (5) au moyen d'un coussinet de pivotement (11), **caractérisé en ce que** les éléments de face d'appui (13, 14) portant le tiroir de dosage (6) sont des moyens d'appui (14) en forme de barre et/ou en forme de tige orientés en forme de rayons sur l'axe de rotation (11) du tiroir de dosage (6), et **en ce qu'**il se trouve entre les moyens d'appui (14) des découpes (15) ouvertes vers le bas et vers l'appui de pivotement (11) du tiroir (6).

8. Epandeur centrifuge selon la revendication 6, **caractérisé en ce que** des éléments d'écartement (16) fixés à la plaque de fond (5) sont disposés dans la région de l'appui lisse (12) entre la plaque de fond (5) et le tiroir de dosage (6), dans lequel les éléments d'écartement (16) sont configurés en forme de peigne et/ou en forme de doigts.

9. Epandeur centrifuge selon au moins une des revendications 6 à 8, **caractérisé en ce que** les éléments de face d'appui (13) et les éléments d'écartement (16) sont réunis en un composant (17).
